(19) **Europäisches Patentamt**
**European Patent Office**
**Office européen des brevets**

(11) **EP 4 143 616 B1**

(12) **EUROPEAN PATENT SPECIFICATION**

(45) Date of publication and mention
of the grant of the patent:
**20.09.2023 Bulletin 2023/38**

(21) Application number: **21791003.3**

(22) Date of filing: **23.09.2021**

(51) International Patent Classification (IPC):
**G02B 1/16** *(2015.01)*　　**G02B 5/08** *(2006.01)*
**G02B 5/28** *(2006.01)*　　**B82Y 20/00** *(2011.01)*
**H01L 31/054** *(2014.01)*　　**F24S 23/70** *(2018.01)*

(52) Cooperative Patent Classification (CPC):
**G02B 1/16; F24S 23/81; G02B 5/0816;**
**G02B 5/085; G02B 5/282;** Y02E 10/40; Y02E 10/52

(86) International application number:
**PCT/IB2021/058690**

(87) International publication number:
**WO 2022/064419 (31.03.2022 Gazette 2022/13)**

(54) **MULTILAYER COATING FOR OPTICAL SOLAR REFLECTOR**

**MEHRSCHICHTIGE BESCHICHTUNG FÜR OPTISCHEN SONNENREFLEKTOR**

**REVÊTEMENT MULTICOUCHE POUR RÉFLECTEUR SOLAIRE OPTIQUE**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **23.09.2020　IT 202000022435**

(43) Date of publication of application:
**08.03.2023 Bulletin 2023/10**

(73) Proprietor: **Leonardo S.p.a.**
**00195 Roma (IT)**

(72) Inventors:
• **SIMEONI, Mirko**
**00071 Pomezia (RM) (IT)**
• **URBANI, Alessandro**
**00071 Pomezia (RM) (IT)**
• **MENGALI, Sandro**
**00071 Pomezia (RM) (IT)**

(74) Representative: **Studio Torta S.p.A.**
**Via Viotti, 9**
**10121 Torino (IT)**

(56) References cited:
　　US-A1- 2008 108 122　　US-A1- 2012 147 303
　　US-A1- 2014 313 574　　US-A1- 2015 285 956

## Description

### Technical Sector of the Invention

The present invention relates generally to a multilayer coating with thermo-optical properties.

The present invention finds advantageous, albeit not exclusive, application in the space sector, for example in the manufacture of coatings for a radiator panel or parts of a spacecraft including antennas or other external structures requiring a mitigation of temperature excursions.

In particular, the present invention finds advantageous, albeit not exclusive, application in the manufacture of an optical solar reflector.

### Background of the Invention

The thermal control system of a satellite comprises one or more radiator panels with a surface facing the space designed to regulate the heat exchanged between the spacecraft or the satellite and the external environment. More specifically, since the thermal control system is designed primarily to prevent the spacecraft from overheating in the hot phase, it is necessary for the surface of the radiator panel to reflect the solar radiation and to radiatively dissipate the heat generated on board.

These requirements are regulated on the basis of two thermo-optical parameters: solar absorbance $\alpha$ and hemispheric emissivity $\varepsilon$.

On the surface of a radiator panel, the solar absorbance $\alpha$ must be as low as possible (generally required $\leq 0.20$), the hemispherical emissivity $\varepsilon$ must be as high as possible (generally required $\geq 0.80$), and both values must remain constant during the satellite's life cycle (15 years for a telecommunications satellite in geostationary orbit).

In addition to this, the surface of the radiator panel must be capable of dissipating to mass the charges generated by the interaction with electrons, protons and ionising particles, which might otherwise cause electrostatic discharges and damage the on-board instrumentation.

An economical way to control the thermo-optical properties of the surface is to coat the panel with a white paint consisting of inorganic particles incorporated in an organic matrix. However, white paints have poor electrostatic dissipation properties and generally age. In particular, $\alpha$ gradually increases due to the interaction of the organic matrix with UV radiations and the particles. In addition, adhesion to the substrate may be reduced due to the prolonged exposure to either radiations or temperature excursions.

A better approach to control the surface properties is to cover the radiator panel with optical solar reflectors (OSR), of which two types are available on the market today: quartz OSR and second flexible surface mirrors (SSM).

A quartz OSR is a small quartz tile of about 40x40 mm and with thickness of about 100-200 microns, coated with a silver metal mirror protected by Inconel on the side facing the radiator. The quartz substrate provides a high value of $\varepsilon$, while the metal layer provides a low value of $\alpha$. The surface facing outwards is coated with a thin layer of transparent and conductive oxide to allow charges to dissipate. A conductive resin which is applied either manually or with a robot is used to glue the tiles to the panel. Quartz OSRs show excellent thermo-optical properties and durability in the space environment, but have high procurement, application and launch costs, are easy to break and can only be applied to planar radiators.

A flexible SSM is based on the same architecture and operating principle as a quartz OSR, but the quartz substrate is replaced by a transparent sheet of fluorinated ethylene polymer (FEP). Flexible SSMs are relatively inexpensive and easy to handle and apply, on either planar or curved panels, but they tend to age rather rapidly due to the interaction of the FEP film with the space environment and, in particular, with the UV radiations (which makes the film brittle and opaque) and with atomic oxygen (which erodes the film). Attempts to increase durability by adding a UV filter to the outward-facing surface of the film were only partially successful. Poor adhesion of the inorganic layers on FEP is one of the possible causes. In general, flexible SSMs are not recommended for space missions longer than 5-6 years.

Coating films for radiators are known from US2014313574.

### Object and Summary of the Invention

The need is therefore felt in the art for a new class of coatings that combine the thermo-optical performance and durability in space of quartz OSRs with the ease of use and low cost of flexible SSMs.

It is therefore an aim of the present invention to provide a new coating that has improved thermo-optical properties and durability in space and is free of the disadvantages of known coatings.

This aim is achieved by the present invention as it relates to a product according to claim 1 and an optical solar reflector according to claim 14.

In particular, according to a first aspect of the present invention there is provided a product comprising a substrate and a multilayer coating for the thermal control of a surface comprising a first inner layer intended to be deposited on said surface, a second intermediate layer applied on said first inner layer and a third outer layer applied on said second intermediate layer in which:

- said first inner layer comprises a co-dispersion of conductive nanoparticles and dielectric nanoparticles, wherein the volume fraction of conductive nanoparticles increases along the thickness of said first inner layer moving away from said second layer and wherein said first inner layer (2) has a hemispheric emissivity between 0.5 and 0.8;

- said second intermediate layer comprises a plurality of layers wherein at least one layer of a dielectric and transparent material with a high refractive index in the visible is alternated with at least one layer of a dielectric and transparent material with a low refractive index in the visible and wherein the refractive index of each layer of dielectric and transparent material with high refractive index in the visible is higher than the refractive index of each adjacent layer of dielectric and transparent material with low refractive index in the visible; and

- said third outer layer made of a transparent and conductive oxide having a resistivity of less than $1 \times 10^{-3}$ ohm × cm.

The term "transparent in the visible" means a material having an extinction coefficient in the visible spectrum of less than $1 \times 10^{-3}$ preferably $1 \times 10^{-4}$.

Advantageously, the coating of the invention is a completely inorganic coating. The coating is resistant to the stresses coming from the space and satisfies all the thermo-optical and charge dissipation requirements necessary for this application. In addition, it protects the substrate from direct interaction with UV rays, atomic oxygen and low-energy charged particles.

According to a second aspect of the invention, there is also provided an optical solar reflector comprising the multilayer coating as described above.

## Brief Description of the Drawings

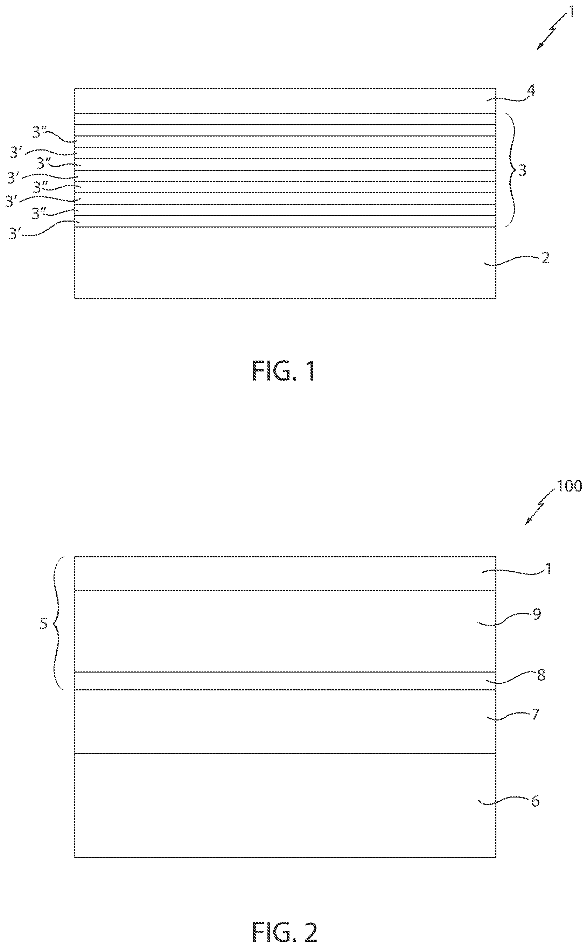

Figure 1 shows a schematic representation of the multilayer coating according to the present invention. Figure 2 shows a schematic representation of a radiator panel comprising an optical solar radiator according to the present invention.

## Detailed Description of Preferred Embodiments of the Invention

The present invention will now be described in detail with reference to the accompanying figures to allow a skilled person to make and use it. Various modifications of the embodiment described will be immediately clear to the skilled person and the general principles disclosed can be applied to other embodiments and applications without departing from the protection scope of the present invention, as defined in the accompanying drawings. Therefore, the present invention should not be considered limited to the embodiments described and shown but should be granted the widest protective scope in accordance with the features described and claimed.

Unless otherwise defined, all the herein used technical and scientific terms have the same meaning commonly used by the ordinary skilled in the art of the present invention. In case of conflict, the present invention, including definitions provided, will be binding. Furthermore, the examples are provided for merely illustrative purposes and must not be regarded as limiting.

In order to facilitate understanding of the embodiments described herein, reference will be made to some specific embodiments and a specific language will be used to describe them. The terminology used herein is for the purpose of describing only particular embodiments, and is not intended to limit the scope of the present invention.

## Multilayer coating 1

Referring to Figure 1, the multilayer coating 1 of the present invention is a coating with thermo-optical properties which can be produced by sputtering or with other physical vapour deposition technique and consists of three functionally and structurally distinct layers:

- a first inner layer 2, which acts as an emitter of infrared radiations, deposited on the surface of the substrate to be coated;
- a second intermediate layer 3, which acts as a solar reflector, arranged above the first inner layer 2; and
- a third outer layer 4, which acts as an electrostatic dissipator, facing outwards, i.e. towards the space.

## First inner layer 2 - infrared emitter

The first inner layer 2 is made of a co-dispersion of conductive nanoparticles and dielectric nanoparticles. These materials are ceramic-metal composites also known as CERMET.

The first inner layer 2 is graded, i.e. the volume fraction of the conductive nanoparticles increases along the thickness of the first inner layer 2 moving away from the interface thereof with the second intermediate layer 3. In one embodiment, the volume fraction of the conductive nanoparticles increases along the thickness of the inner layer 2, from a maximum value $\geq 70\%$ at the interface with the substrate to a minimum value $\leq 30\%$ at the interface with the intermediate layer 3.

In one embodiment, the volume fraction of the conductive nanoparticles increases continuously along the thickness of the first inner layer 2 moving away from the interface thereof with the second intermediate layer 3. In an alternative embodiment, the volume fraction of the conductive nanoparticles increases in small, discontinuous steps.

The infrared extinction coefficient follows the same trend: low at the interface of the inner layer 2 with the second intermediate layer 3 and high at the interface of the inner layer 2 facing towards the substrate. This configuration creates an electromagnetic trap, wherein the radiation coming from the space is absorbed within a progressively denser medium, with no reflections at the interfaces. In one embodiment, the first inner layer 2 effectively absorbs the infrared radiation from 3 to 20 microns and beyond.

Taking into account that:

- absorbance and emissivity are equivalent according to Kirchoff's law;
- the working temperature of a radiator panel of a spacecraft is around 300 K; and
- the emissivity peak of a black body at 300 K is at a wavelength of 10 microns,

it follows that the first inner layer 2 is characterized by a high hemispherical emissivity $\varepsilon$.

A second relevant feature of the first inner layer 2 is of the mechanical type. Unlike many black coatings that have a porous or columnar structure, the first inner layer 2 is compact and hard, and shows excellent adhesion to a variety of substrate materials. Furthermore, thanks to its graduated composition, it is effective in compensating for the misalignment of the coefficient of thermal expansion (CTE) between the substrate (higher CTE) and the second intermediate layer 3 (lower CTE).

The first inner layer 2 may be deposited on the bare substrate directly or by interposing an intermediate layer of alumina or other material that promotes the thermomechanical coupling and the adhesion to the substrate.

In one embodiment, the first inner layer 2 has a thickness between 1 and 4 microns, and a hemispherical emissivity between 0.5 and 0.8.

In one embodiment, the first inner layer 2 is made using a conductive material selected from the group consisting of aluminium, $Al_xO$ (i.e. aluminium suboxides), TiN, indium tin oxide, aluminium zinc oxide, steel, Ti, Mo, rare earths, transition metals and their combinations, preferably aluminium and $Al_xO$.

In one embodiment, the first inner layer 2 is made using a dielectric material selected from the group consisting of $Al_2O_3$, Al, $SiO_2$, $Ta_2O_5$, $ZrO_2$, $Nb_2O_5$, $Y_2O_3$, $TiO_2$, and their combinations, preferably $Al_2O_3$.

The first inner layer 2 can be produced by reactive sputtering from a single source by gradually changing the oxidation state of the material during deposition. In an alternative embodiment, the layer is produced by co-deposition of different materials from two or more distinct sources.

Second intermediate layer 3 - Solar reflector

The second intermediate layer 3 is arranged above the first inner layer 2 and acts as a solar reflector. It consists of a sequence of layers of dielectric and transparent materials wherein a layer of material with a high refractive index 3' is alternated with a layer of material with a low refractive index 3".

The layers of materials with high refractive index 3' can be all made of the same material or different materials. The term "high refractive index" means a refractive index in the visible between 1.6 and 2.5.

The layers of materials with low refractive index 3" can also be made all of the same material or different materials. The term "low refractive index" means a refractive index in the visible between 1.2 and 1.7.

For the intermediate layer 3 to perform its function, it is necessary that each layer with high refractive index 3' has a refractive index higher than the refractive index of the adjacent layers with low refractive index 3". In one embodiment this difference between the refractive index of the layer 3' and that of the layer 3" is at least 0.5, preferably 0.7.

The term "transparent" means a material having an extinction coefficient in the visible spectrum of less than $1 \times 10^{-3}$ preferably $1 \times 10^{-4}$.

The constructive and destructive interferences of the electromagnetic waves at the interfaces between the layers with high refractive index 3' and the layers with low refractive index 3" are used to generate a high reflectance in the solar spectrum.

The succession of the materials of the second intermediate layer 3 can be designed following one of the several approaches known to the optical designer, e.g. using quarter-wavelength sequences or quasi-periodic Fibonacci sequences or rugate filters and/or hybrid solutions. In the quarter-wavelength approach, the second intermediate layer 3 results by superposition of several filters that reflect different portions of the solar spectrum. Each filter is based on a three-layer unit (U) which can be repeated several times to improve performance. Using the standard notation wherein:

- 1H denotes a layer of material with a high refractive index having an optical thickness equal to one quarter of the central wavelength; and
- 1 L denotes a layer with low index material having an optical thickness equal to one quarter of the central working wavelength of the filter;

the basic unit U of the filter is constructed using the relation:

$$1U = \tfrac{1}{2}\,L\ 1H\ \tfrac{1}{2}\,L$$

or

$$1U = \tfrac{1}{2}H\ 1L\ \tfrac{1}{2}H.$$

Each filter is obtained by repeating the basic unit from 2 to 5 times. Different filters are used to reflect different areas of the solar spectrum. As a whole, the second intermediate layer 3 derives from the superposition of 15-50 filters centred at different wavelengths so as to uniformly cover the entire UV-VIS-NIR spectrum, from 100 nm to 1500 nm.

The second intermediate layer 3 may be deposited on the first inner layer 2 directly or by interposition of an intermediate layer of alumina or other material that improves the thermo-optical and/or mechanical coupling between the two layers.

In one embodiment, the materials of the second intermediate layer 3 are those commonly used to construct optical coatings in the UV-VIS-NIR spectrum, and comprise $SiO_2$, $MgF_2$, $Ta_2O_5$, $ZrO_2$, $TiO_2$, $Nb_2O_5$, $Y_2O_3$, $YF_3$ and their mixtures.

In one embodiment, the second intermediate layer 3 is deposited by reactive sputtering.

In one embodiment, the second intermediate layer 3 consists of 45-150 layers, has a total thickness of 5-15 microns, and guarantees $\alpha$ in the range $0.20 \div 0.05$ or less on smooth surfaces.

The second intermediate layer 3 always has a positive effect on the emissivity of the multilayer coating of the invention, which tends to increase. However, the effect may be more or less strong or weaker depending on the materials used and the total thickness.

Third outer layer 4 - electrostatic dissipator

The third outer layer 4 is made of a transparent, and conductive oxide having a resistivity of less than $1 \times 10^{-3}$ ohm $\times$ cm and an extinction coefficient in the visible of less than $1 \times 10^{-3}$ preferably $1 \times 10^{-4}$.

In a preferred embodiment, the transparent and conductive layer is made of a transparent and conductive oxide selected from the group consisting of indium tin oxide, alumina doped zinc oxide, cadmium oxide and its alloys, zinc oxide and its alloys, tin oxide and its alloys, antimony and fluorine doped tin oxide.

The outer layer 4 may be deposited on the second intermediate layer 3 directly or mediated by an intermediate layer made of $SiO_2$, alumina, or other material transparent in the UV-VIS-NIR spectrum which can be used, among other things, to protect the upper layers of the multilayer coating of the invention from erosion due to atomic oxygen.

In one embodiment, the third outer layer 4 may be deposited by sputtering above the second intermediate layer, and may have a thickness of $10 \div 50$ nm and a surface resistivity of $10^3 \div 10^6$ Ohm/square.

Applications of the multilayer coating of the invention

The multilayer coating 1 of the invention may be used to make a product, for example a radiator panel or parts of a spacecraft including antennas or other external structures requiring mitigation of temperature excursions, wherein the multilayer coating is applied to the substrate to be coated.

The multilayer coating 1 may be applied directly to the surface whose thermo-optical properties are to be modified, for example the aluminium or carbon fibre reinforced polymer skin of a radiator panel or of an antenna.

The application of the coating may also precede the final assembly of the product, i.e. the coupling between the skin and the honeycomb bearing structure of the product. The surface to be coated can be polished prior to application of the coating to improve the performance $\alpha$ of the coating.

In an alternative embodiment, the multilayer coating of the invention can be used to manufacture a flexible optical solar reflector.

For this purpose, the multilayer coating is deposited on a flexible substrate, preferably a metal film, polymer film, composite (in particular CFRP) or flexible glass. Subsequently, the surface of the film opposite to that on which the coating was deposited is glued on the radiator panel or on the other outer surface of the spacecraft using, for example, a conductive resin or a pressure sensitive adhesive (PSA).

In one embodiment, the flexible substrate is made of polyimide or polyetherketone (PEEK), and the film thickness is between 25 and 100 microns.

In an alternative embodiment, the flexible substrate is made of fluorinated ethylene polymers (FEP), polycarbonate, polyethylene or other polymer suitable for use in the space, titanium, aluminium or other metal material, graphite, CFPR or other composite material, ultra-thin flexible glass.

The substrate acts only as a flexible support for the coating and no longer needs to be optically transparent. This allows the FEP used in known flexible SSMs to be replaced by other types of polymer that are cheaper and easier to coat.

In one embodiment, the surface of the flexible substrate not coated with the multilayer coating of the invention is metallised and the electrical contact between the surface of the optical solar reflector facing outwards and the surface facing towards the surface to be coated is determined through a path of small through holes (the so-called perforated interconnections).

Figure 2 shows an exemplary embodiment of a solar radiator 100 incorporating a flexible optical solar reflector 5 according to the invention.

In particular, the flexible optical solar reflector 5 is applied to the outer surface (skin) 6 of the solar radiator 100 by means of a layer of pressure sensitive adhesive 7.

The flexible optical solar reflector 5 comprises a first outer portion consisting of the multilayer coating 1 deposited on a polymer sheet 9. The surface of the polymer film facing towards the skin 6 of the radiator 100 is coated with a metal layer 8 which is then in contact with the adhesive layer 7.

The flexible optical solar reflector according to the invention combines the ease of use and applicability on either flat or curved surfaces typical of the flexible SSMs with the thermo-optical properties and spatial durability of the quartz OSRs, which make it suitable for application on devices involved in 15-year missions in orbit. Furthermore, the overall cost for an optical solar reflector according to the invention is similar to that of a flexible OSR known in the art but much lower than that of a quartz OSR.

The multilayer coating of the invention preferably has a hemispherical emissivity between 0.1 and 0.8.

## Claims

1. Product comprising a substrate (9) and a multilayer coating (1) for the thermal control of a surface (6) of said substrate (9) comprising a first inner layer (2) intended to be deposited on said surface, a second intermediate layer (3) applied on said first inner layer (2) and a third outer layer (4) applied on said second intermediate layer (3) in which:

   - said first inner layer (2) comprises a co-dispersion of conductive nanoparticles and dielectric nanoparticles, wherein the volume fraction of conductive nanoparticles increases along the thickness of said first inner layer moving away from said second intermediate layer (3) and wherein said first inner layer (2) has a hemispheric emissivity between 0.5 and 0.8;
   - said second intermediate layer comprises a plurality of layers wherein at least one layer of a dielectric material transparent in the visible with a high refractive index in the visible (3') is alternated with at least one layer of a dielectric material transparent in the visible with a low refractive index in the visible (3") and wherein the refractive index of each layer of dielectric material transparent in the visible with high refractive index in the visible (3') is higher than the refractive index of each adjacent layer of dielectric material transparent in the visible with low refractive index in the visible (3"); and
   - said third outer layer (4) is made of a conductive oxide transparent in the visible having a resistivity of less than $1 \times 10^{-3}$ ohm $\times$ cm.

2. Product according to Claim 1, **characterized in that** said conductive nanoparticles are in a material selected from the group consisting of aluminium, $Al_xO$, TiN, indium tin oxide, aluminium zinc oxide, steel, Ti, Mo, rare earths, transition metals and their combinations.

3. Product according to Claim 1, **characterized in that** said dielectric nanoparticles are in a material selected in the group consisting of $Al_2O_3$, Al, $SiO_2$, $Ta_2O_5$, $ZrO_2$, $Nb_2O_5$, $Y_2O_3$, $TiO_2$, AlN, and their combinations.

4. Product according to Claim 1, **characterized in that** said dielectric nanoparticles are made of $Al_2O_3$ and said conductive nanoparticles are made of $Al_xO$ or Al.

5. Product according to Claim 1, **characterized in that** said first inner layer (2) has a thickness between 1 and 4 micrometers.

6. Product according to Claim 1, **characterized in that** said second intermediate layer (3) has a thickness between 5 and 15 micrometers.

7. Product according to Claim 1, **characterized in that** said second intermediate layer (3) comprises between 45 and 150 dielectric layers transparent in the visible.

8. Product according to Claim 1, **characterized in that** said second intermediate layer (3) is made of a material selected in the group consisting of $SiO_2$, $MgF_2$, $Ta_2O_5$, $ZrO_2$, $TiO_2$, $Nb_2O_5$, $Y_2O_3$, $YF_3$ and their mixtures.

9. Product according to Claim 1, **characterized in that** the difference between the refractive index of said layer of a dielectric material transparent in the visible with high refractive index in the visible (3') and the refractive index of said layer of a dielectric material transparent in the visible with low refractive index in the visible (3") is at least 0.5.

10. Product according to Claim 1, **characterized in that** said layer of a dielectric material transparent in the visible with a high refractive index in the visible (3') has a refractive index in the visible between 1.6 and 2.5.

11. Product according to Claim 1, **characterized in that** said layer of a dielectric material transparent in the visible with a low refractive index in the visible (3") has a refractive index in the visible between 1.2 and 1.7.

12. Product according to Claim 1, **characterized in that** said third outer layer (4) is made of a material selected in the group consisting of indium tin oxide, alumina doped zinc oxide, cadmium oxide and its alloys, zinc oxide and its alloys, tin oxide and its alloys, antimony and fluorine doped tin oxide.

13. Product according to Claim 1, **characterized in that** said third outer layer (4) has a surface resistivity between $10^3$ and $10^6$ ohm/square.

14. Optical solar reflector (5) comprising a product according to any one of Claims 1 to 13.

15. Optical solar reflector (5) according to claim 14, **characterized in that** said substrate (9) is a flexible substrate (9).

**16.** Optical solar reflector according to claim 15, **characterized in that** said flexible substrate (9) is a metal film, polymer film, composite or flexible glass.

**Patentansprüche**

**1.** Produkt, das ein Substrat (9) und eine mehrlagige Beschichtung (1) für die thermische Kontrolle einer Oberfläche (6) des Substrats (9) umfasst, die eine erste Innenlage (2), die dafür vorgesehen ist, dass sie auf der Oberfläche abgeschieden wird, eine zweite Zwischenlage (3), die auf der ersten Innenlage (2) aufgebracht wird, und eine dritte Außenlage (4), die auf der zweiten Zwischenlage (3) aufgebracht wird, umfasst, wobei:

- die erste Innenlage (2) eine Co-Dispersion von leitfähigen Nanopartikeln und dielektrischen Nanopartikeln umfasst, wobei der Volumenanteil von leitfähigen Nanopartikeln längs der Dicke der ersten Innenlage in einer Richtung weg von der zweiten Zwischenlage (3) zunimmt, und wobei die erste Innenlage (2) einen halbräumlichen Emissionsgrad im Bereich zwischen 0,5 und 0,8 hat;
- die zweite Zwischenlage mehrere Lagen umfasst, wobei sich wenigstens eine Lage aus einem dielektrischen Material, das im sichtbaren Bereich mit einer hohen Brechzahl im sichtbaren Bereich (3') lichtdurchlässig ist, mit wenigstens einer Lage eines dielektrischen Materials abwechselt, das im sichtbaren Bereich mit einer niedrigen Brechzahl im sichtbaren Bereich (3") lichtdurchlässig ist, und wobei die Brechzahl jeder Lage des dielektrischen Materials, das im sichtbaren Bereich mit einer hohen Brechzahl im sichtbaren Bereich (3') lichtdurchlässig ist, höher als die Brechzahl jeder angrenzenden Lage aus dielektrischem Material ist, das im sichtbaren Bereich mit einer niedrigen Brechzahl im sichtbaren Bereich (3") lichtdurchlässig ist; und
- die dritte Außenlage (4) aus einem leitfähigen Oxid hergestellt ist, das im sichtbaren Bereich lichtdurchlässig ist, das einen spezifischen elektrischen Widerstand von weniger als $1 \times 10^{-3}$ Ohm $\times$ cm hat.

**2.** Produkt nach Anspruch 1, **dadurch gekennzeichnet, dass** die leitfähigen Nanopartikel aus einem Material sind, das aus der Gruppe ausgewählt ist, die aus Aluminium, $Al_xO$, TiN, Indiumzinnoxid, Aluminiumzinkoxid, Stahl, Ti, Mo, seltenen Erden, Übergangsmetallen und deren Kombinationen besteht.

**3.** Produkt nach Anspruch 1, **dadurch gekennzeichnet, dass** die dielektrischen Nanopartikel aus einem Material sind, das aus der Gruppe ausgewählt ist, die aus $Al_2O_3$, Al, $SiO_2$, $Ta_2O_5$, $ZrO_2$, $Nb_2O_5$, $Y_2O_3$, $TiO_2$, AIN und deren Kombinationen besteht.

**4.** Produkt nach Anspruch 1 **dadurch gekennzeichnet, dass** die dielektrischen Nanopartikel aus $Al_2O_3$ hergestellt sind und die leitfähigen Nanopartikel aus $Al_xO$ oder Al hergestellt sind.

**5.** Produkt nach Anspruch 1, **dadurch gekennzeichnet, dass** die erste Innenlage (2) eine Dicke zwischen 1 und 4 Mikrometer hat.

**6.** Produkt nach Anspruch 1, **dadurch gekennzeichnet, dass** die zweite Zwischenlage (3) eine Dicke zwischen 5 und 15 Mikrometer hat.

**7.** Produkt nach Anspruch 1, **dadurch gekennzeichnet, dass** die zweite Zwischenlage (3) zwischen 45 und 150 dielektrische Lagen umfasst, die im sichtbaren Bereich lichtdurchlässig sind.

**8.** Produkt nach Anspruch 1, **dadurch gekennzeichnet, dass** die zweite Zwischenlage (3) aus einem Material hergestellt ist, das aus der Gruppe ausgewählt wird, die aus $SiC_2$, $MgF_2$, $Ta_2O_5$, $ZrO_2$, $TiO_2$, $Nb_2O_5$, $Y_2O_3$, $YF_3$ und deren Mischungen besteht.

**9.** Produkt nach Anspruch 1, **dadurch gekennzeichnet, dass** die Differenz zwischen der Brechzahl der Lage aus dielektrischem Material, das im sichtbaren Bereich mit einer hohen Brechzahl im sichtbaren Bereich (3') lichtdurchlässig ist, und der Brechzahl der Lage aus dielektrischem Material, das im sichtbaren Bereich mit einer niedrigen Brechzahl im sichtbaren Bereich (3") lichtdurchlässig ist, wenigstens 0,5 beträgt.

**10.** Produkt nach Anspruch 1, **dadurch gekennzeichnet, dass** die Lage aus dielektrischem Material, das im sichtbaren Bereich mit einer hohen Brechzahl im sichtbaren Bereich (3') lichtdurchlässig ist, eine Brechzahl im sichtbaren Bereich zwischen 1,6 und 2,5 hat.

**11.** Produkt nach Anspruch 1, **dadurch gekennzeichnet, dass** die Lage aus dielektrischem Material, das im sichtbaren Bereich mit einer niedrigen Brechzahl im sichtbaren Bereich (3") lichtdurchlässig ist, eine Brechzahl im sichtbaren Bereich zwischen 1,2 und 1,7 hat.

**12.** Produkt nach Anspruch 1, **dadurch gekennzeichnet, dass** die dritte Außenlage (4) aus einem Material hergestellt ist, das aus der Gruppe ausgewählt ist, die aus Indiumzinnoxid, mit Aluminium dotiertem Zinkoxid, Cadmiumoxid und dessen Legierungen, Zinkoxid und dessen Legierungen, Zinnoxid und dessen Legierungen, und mit Wismut- und Fluor dotiertem Zinnoxid besteht.

**13.** Produkt nach Anspruch 1, **dadurch gekennzeichnet, dass** die dritte Außenlage (4) einen Oberflächenwiderstand zwischen $10^3$ und $10^6$ Ohm/Quadrat hat.

**14.** Optischer Solarreflektor (5), der ein Produkt nach einem der Ansprüche 1 bis 13 umfasst.

**15.** Optischer Solarreflektor (5) nach Anspruch 14, **dadurch gekennzeichnet, dass** das Substrat (9) ein biegsames Substrat (9) ist.

**16.** Optischer Solarreflektor nach Anspruch 15, **dadurch gekennzeichnet, dass** das biegsame Substrat (9) eine Metallfolie, eine Polymerfolie, ein Verbundwerkstoff oder ein biegsames Glas ist.

## Revendications

**1.** Produit comprenant un substrat (9) et un revêtement multicouche (1) pour la régulation thermique d'une surface (6) dudit substrat (9) comprenant une première couche intérieure (2) destinée à être déposée sur ladite surface, une deuxième couche intermédiaire (3) appliquée sur ladite première couche intérieure (2) et une troisième couche extérieure (4) appliquée sur ladite deuxième couche intermédiaire (3), dans lequel :

- ladite première couche intérieure (2) comprend une co-dispersion de nanoparticules conductrices et de nanoparticules diélectriques, dans laquelle la fraction volumique des nanoparticules conductrices augmente le long de l'épaisseur de ladite première couche intérieure en s'éloignant de ladite deuxième couche intermédiaire (3), et laquelle première couche intérieure (2) a une émissivité hémisphérique comprise entre 0,5 et 0,8 ;
- ladite deuxième couche intermédiaire comprend une pluralité de couches, dans laquelle au moins une couche d'un matériau diélectrique transparent dans la gamme visible, ayant un indice de réfraction élevé dans la gamme visible (3') est alternée avec au moins une couche d'un matériau diélectrique transparent dans la gamme visible, ayant un indice de réfraction bas dans la gamme visible (3"), et dans laquelle l'indice de réfraction de chaque couche de matériau diélectrique transparent dans la gamme visible ayant un indice de réfraction élevé dans la gamme visible (3') est supérieur à l'indice de réfraction de chaque couche adjacente de matériau diélectrique transparent dans la gamme visible ayant un indice de réfraction bas dans la lumière visible (3") ; et
- ladite troisième couche extérieure (4) est faite en un oxyde conducteur transparent dans la gamme visible, ayant une résistivité inférieure à $1 \times 10^{-3}$ ohm $\times$ cm.

**2.** Produit selon la revendication 1, **caractérisé en ce que** lesdites nanoparticules conductrices sont en un matériau choisi dans le groupe constitué par l'aluminium, $Al_xO$, TiN, l'oxyde d'indium et d'étain, l'oxyde d'aluminium et de zinc, un acier, Ti, Mo, les terres rares, les métaux de transition, et leurs combinaisons.

**3.** Produit selon la revendication 1, **caractérisé en ce que** lesdites nanoparticules diélectriques sont en un matériau choisi dans le groupe constitué par $Al_2O_3$, Al, $SiO_2$, $Ta_2O_5$, $ZrO_2$, $Nb_2O_5$, $Y_2O_3$, $TiO_2$, AlN, et leurs combinaisons.

**4.** Produit selon la revendication 1, **caractérisé en ce que** lesdites nanoparticules diélectriques sont faites en $Al_2O_3$ et lesdites nanoparticules conductrices sont faites en $Al_xO$ ou Al.

**5.** Produit selon la revendication 1, **caractérisé en ce que** ladite première couche intérieure (2) a une épaisseur comprise entre 1 et 4 micromètres.

**6.** Produit selon la revendication 1, **caractérisé en ce que** ladite deuxième couche intermédiaire (3) a une épaisseur comprise entre 5 et 15 micromètres.

**7.** Produit selon la revendication 1, **caractérisé en ce que** ladite deuxième couche intermédiaire (3) comprend entre 45 et 150 couches diélectriques transparentes dans la gamme visible.

**8.** Produit selon la revendication 1, **caractérisé en ce que** ladite deuxième couche intermédiaire (3) est faite en un matériau choisi dans le groupe constitué par $SiO_2$, $MgF_2$, $Ta_2O_5$, $ZrO_2$, $TiO_2$, $Nb_2O_5$, $Y_2O_3$, $YF_3$ et leurs mélanges.

**9.** Produit selon la revendication 1, **caractérisé en ce que** la différence entre l'indice de réfraction de ladite couche en un matériau diélectrique transparent dans la gamme visible ayant un indice de réfraction élevé dans la gamme visible (3') et l'indice de réfraction de ladite couche en un matériau diélectrique transparent dans la gamme visible ayant un indice de réfraction bas dans la gamme visible (3") est d'au moins 0,5.

**10.** Produit selon la revendication 1, **caractérisé en ce que** ladite couche en un matériau diélectrique transparent dans la gamme visible ayant un indice de réfraction élevé dans la gamme visible (3') a un indice de réfraction dans la gamme visible compris entre 1,6 et 2, 5.

11. Produit selon la revendication 1, **caractérisé en ce que** ladite couche en un matériau diélectrique transparent dans la gamme visible ayant un indice de réfraction bas dans la gamme visible (3") a un indice de réfraction dans la gamme visible compris entre 1,2 et 1,7.

12. Produit selon la revendication 1, **caractérisé en ce que** ladite troisième couche extérieure (4) est faite en un matériau choisi dans le groupe constitué par l'oxyde d'indium et d'étain, l'oxyde de zinc dopé à l'alumine, l'oxyde de cadmium et ses alliages, l'oxyde de zinc et ses alliages, l'oxyde d'étain et ses alliages, l'oxyde d'étain dopé à l'antimoine et au fluor.

13. Produit selon la revendication 1, **caractérisé en ce que** ladite troisième couche extérieure (4) a une résistivité en surface comprise entre $10^3$ et $10^6$ ohm/carré.

14. Réflecteur solaire optique (5) comprenant un produit selon l'une quelconque des revendications 1 à 13.

15. Réflecteur solaire optique (5) selon la revendication 14, **caractérisé en ce que** ledit substrat (9) est un substrat flexible (9).

16. Réflecteur solaire optique selon la revendication 15, **caractérisé en ce que** ledit substrat flexible (9) est un film métallique, un film polymère, un composite ou un verre flexible.

FIG. 1

FIG. 2

**EP 4 143 616 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014313574 A